# EUROPEAN PATENT APPLICATION

(11) **EP 4 293 841 A1**
(43) Date of publication of application: **20.12.2023**
(21) Application number: 22899619.5
(22) Date of filing: 09.09.2022
(51) Int. Cl.: H01S 3/067, H01S 3/101, H01S 3/106

(54) **OPTICAL PATH SYSTEM OF PULSED FIBER LASER, AND LASER**

(30) Priority: 26.04.2022 CN 202210441426
(71) Applicant: Wuhan Raycus Fiber Laser Technologies Co., Ltd, East Lake Hi-Tech Development Zone Wuhan, Hubei 430000 (CN)
(72) Inventor: TAO, Binkai, Wuhan, Hubei 430000 (CN); GAO, Shuai, Wuhan, Hubei 430000 (CN); YAN, Penghui, Wuhan, Hubei 430000 (CN); HUANG, Bao, Wuhan, Hubei 430000 (CN); YAN, Dapeng, Wuhan, Hubei 430000 (CN)
(74) Representative: Murgitroyd & Company
(86) International application number: PCT/CN2022/118222
(87) International publication number: WO 2023/206913

(57) **Abstract**

An optical path system of a pulsed fiber laser and a laser are provided in the present disclosure. The system includes a seed source, a first optical beam splitter, an optical modulator, and at least one optical fiber amplifier assembly sequentially connected. The assembly includes a first amplifier and a reflector, and the first amplifier is connected to the optical modulator and the reflector. The optical signal generated by the seed source incidents into the reflector sequentially through the first optical beam splitter, the optical modulator, and the first amplifier, and the optical signal reflected by the reflector returns through the original path and is emitted from the first optical beam splitter.

## Description

### FIELD OF INVENTION

The present disclosure relates to a fiber laser technology, and in particular relates to an optical path system of a pulsed fiber laser and a laser.

### BACKGROUND OF INVENTION

Due to good beam quality, high efficiency, good heat dissipation, high reliability and easy maintenance, a fiber laser is widely used in laser processing, fiber optic communication, military defense and security, medical mechanical instruments, or the like. A nanosecond pulsed fiber laser with low or medium power is currently the first choice in laser processing and micro processing such as engraving and marking with its high efficiency, compactness, stability, and low cost.

With the increasing demand for processing quality and efficiency in various industries, people are putting higher demands on the nanosecond pulsed fiber laser. A general nanosecond pulsed fiber laser is constructed with isolated and unidirectional amplification on a seed source through one or multiple levels. For the suppression of amplified spontaneous emission and inelastic-scattered light, amplification factor of each optical fiber amplifier cannot be adjusted higher. In addition, there is also a problem of poor pulse leveling, resulting in that the laser has certain limitation in the practical application, and cannot meet demand for finer and faster processing or micro processing.

### SUMMARY OF INVENTION

### Technical Problem

Embodiments of the present disclosure provide an optical path system of a pulsed fiber laser and a laser, to solve a problem of low amplification factor and poor pulse leveling of a current pulsed laser.

### Solutions For Problem

### Technical Solutions

In a first aspect, embodiments of the present disclosure provide an optical path system of the pulsed fiber laser including a seed source, a first optical beam splitter, an optical modulator, and at least one optical fiber amplifier assembly sequentially connected, wherein the optical fiber amplifier assembly includes a first amplifier and a reflector, the first amplifier is connected to the optical modulator and the reflector, an optical signal generated by the seed source incidents into the reflector sequentially through the first optical beam splitter, the optical modulator, and the first amplifier, and the optical signal reflected by the reflector is transmitted sequentially through the first amplifier and the optical modulator and emitted from the first optical beam splitter.

Optionally, the fiber optic amplification assembly further includes an energy transferring optical fiber disposed between the first amplifier and the reflector, the energy transferring optical fiber connects the first amplifier and the reflector, the optical signal generated by the seed source incidents into the reflector sequentially through the first optical beam splitter, the optical modulator, the first amplifier, and the energy transferring optical fiber, and the optical signal reflected by the reflector is transmitted sequentially through the energy transferring optical fiber, the first amplifier, and the optical modulator, and emitted from the first optical beam splitter.

Optionally, the energy transferring optical fiber is disposed to increase a propagation path of the optical signal, to increase a time domain duration of a pulse, and to extend transmission time of the pulse.

Optionally, the optical modulator is used to adjust waveform of the pulse and output a pulse train.

Optionally, there are two optical fiber amplifier assemblies, and there is a second optical beam splitter provided between the optical modulator and the optical fiber amplifier assemblies. The second optical beam splitter connects the optical modulator and the optical fiber amplifier assemblies.

Optionally, the optical path system further includes a second amplifier and a first optical isolator, wherein the second amplifier is connected to the first optical beam splitter and the first optical isolator, and the optical signal processed by the fiber amplifier assembly and the optical modulator enters to the second amplifier through the first optical beam splitter and is emitted from the first optical isolator.

Optionally, the first amplifier includes a plurality of amplifier sub-portions connected in series, adjacent ones of the amplifier sub-portions are connected to each other by a filter, one terminal of a first one of the amplifier sub-portions is connected to the optical modulator, and one terminal of a last one of the amplifier sub-portions at a last place is connected to the reflector.

Additionally/alternatively, the second amplifier includes a plurality of amplifier sub-portions connected in series, adjacent ones of the amplifier sub-portions are connected to each other by a filter, one terminal of a first one of the amplifier sub-portions is connected to the first optical beam splitter, and one terminal of a last one of the amplifier sub-portions is connected to the first optical isolator.

Optionally, the second amplifier includes a second gain fiber, a first optical combiner, and a second pump source. A side of the second gain fiber is connected to the first optical beam splitter, and the first optical combiner is connected to the second pump source, the first optical isolator, and another side of the second gain fiber.

Additionally/alternatively, the first amplifier includes a first gain fiber, a first fiber coupler, and a first pump source. The first fiber coupler is connected to the optical modulator, the first pump source, and a side of the first gain fiber. Another side of the gain fiber is connected to the reflector.

Optionally, the second amplifier includes a fourth gain fiber, a second optical combiner, a sixth pump source, a third optical combiner, and a fifth pump source. The third optical combiner is connected to the optical beam splitter, the fifth pump source, and a side of the fourth gain fiber. The second optical combiner is connected to the sixth pump source, the first optical isolator, and another side of the fourth gain fiber.

Additionally/alternatively, the first amplifier includes a third gain fiber, a second fiber coupler, a third fiber coupler, a third pump source, and a fourth pump source. The second fiber coupler is connected to the optical modulator, the third pump source, and a side of the third gain fiber. The third fiber coupler is connected to another side of the third gain fiber, the fourth pump source, and the reflector.

Optionally, the optical modulator is provided with a first channel for allowing the optical signal to enter into the optical fiber amplifier assembly and a second channel for passing the optical signal amplified twice by the optical fiber amplifier assembly.

Optionally, the first channel and the second channel are set in a normal open state.

Optionally, the energy transferring optical fiber includes 6/125 type or 10/125 type of passive fiber.

Optionally, the optical modulator includes a 120 MHz acousto-optic modulator.

In a second aspect, an embodiment of the present disclosure further provides a laser including the optical path system of the pulsed fiber laser described in any of the foregoing.

### Beneficial Effects Of The Invention

### Beneficial Effects

An optical path system of a pulsed fiber laser and a laser are provided in an embodiment of the present disclosure, an optical signal generated by a seed source incidents into a reflector sequentially through a first optical beam splitter, an optical modulator, and a first amplifier. The optical signal amplified by the first amplifier and reflected by the reflector enters into the first amplifier again. The optical signal is amplified by the first amplifier with a double pass, to improve amplification factor of the optical signal. The amplification factor is exponentially increased. The optical signals before and after amplification both pass through the optical modulator. The optical modulator adjusts the optical signal twice, to realize fine modulation of the optical signal. Therefore, the problem of low amplification factor and poor pulse leveling of a current pulsed laser is solved, and thus advantages of greater amplification factor, fine adjustment for waveform, good pulse leveling, simple optical structure and simple control can be achieved.

### ILLUSTRATION OF THE DRAWINGS

### BRIEF DESCRIPTION OF THE DRAWINGS

In order to more clearly illustrate technical solutions in embodiments of the present disclosure, the following is a brief description of the accompanying drawings required in the description of the embodiments. Apparently, the accompanying drawings in the following description are only some of the embodiments of the present disclosure, and other accompanying drawings may be obtained by those skilled in the art without creative work.

For a more complete understanding of the present disclosure and its beneficial effects, the following will be described in connection with the accompanying drawings. Therein, the same accompanying symbols in the following description represent the same parts.
FIG. 1 shows a schematic diagram of an optical path system according to an embodiment of the present disclosure.
FIG. 2 shows a schematic diagram of an optical path system with two optical fiber amplifier assemblies according to an embodiment of the present disclosure.
FIG. 3 shows a schematic diagram of an optical path system with an energy transferring optical fiber according to an embodiment of the present disclosure.
FIG. 4 is a schematic diagram of the optical path system with a second amplifier according to an embodiment of the present disclosure.
FIG. 5 is a schematic diagram of an optical path system with a second amplifier and an energy transferring optical fiber according to an embodiment of the present disclosure.
FIG. 6 shows a schematic diagram of a first amplifier according to an embodiment of the present disclosure.
FIG. 7 shows a diagram of a system of a first type of optical path according to an embodiment of the present disclosure.
FIG. 8 shows a diagram of a system of a second type of optical path according to an embodiment of the present disclosure.
FIG. 9 shows a diagram of a system of a third type of optical path according to an embodiment of the present disclosure.
FIG. 10 shows a diagram of a system of a fourth type of optical path according to an embodiment of the present disclosure.

### IMPLEMENTATIONS OF THE INVENTION

### DETAILED DESCRIPTION OF THE EMBODIMENTS

Technical solutions in the embodiments of the present disclosure will be clearly and completely described below in conjunction with the accompanying drawings in the embodiments of the present disclosure. Apparently, the described embodiments are only a part of, not all of, the embodiments of the present disclosure. Based on the embodiments in the present disclosure, all other embodiments obtained by a person skilled in the art without creative work fall within the scope of the present disclosure.

In an embodiment of the present disclosure, an optical path system of a pulsed fiber laser and a laser are provided to improve the problem of the low amplification factors and the poor pulse leveling of the current pulsed laser. The following will be described in conjunction with the accompanying drawings.

The optical path system of the pulsed fiber laser according to an embodiment of the present disclosure may be applied to a nanosecond laser, a picosecond laser or a femtosecond laser. In an embodiment of the present disclosure, a nanosecond laser is illustrated as an example. The nanosecond laser may be a low power nanosecond pulsed fiber laser, a medium power nanosecond pulsed fiber laser, or a high power nanosecond pulsed fiber laser. The laser may include an optical path system and an electronic control system. The electronic control system is electrically connected to the optical path system. The optical path system is controlled by the electronic control system, and thus an easy control is available.

In order to illustrate a structure of an optical path system more clearly, the optical path system is described below in conjunction with the accompanying drawings.

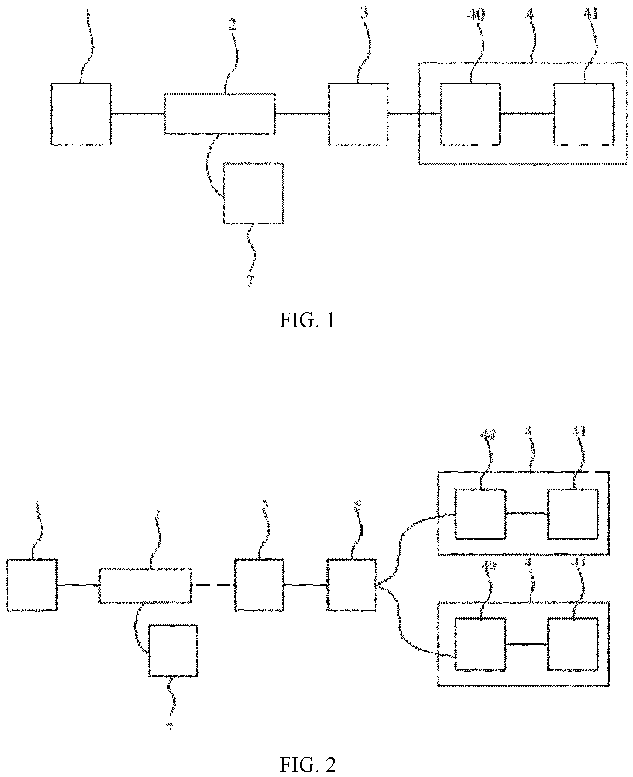

Referring to FIGS. 1 and 2, an optical path system of a pulsed fiber laser according to an embodiment of the present disclosure includes a seed source 1, a first optical beam splitter 2, an optical modulator 3, and at least one optical fiber amplifier assembly 4 sequentially connected. The optical fiber amplifier assembly 4 includes a first amplifier 40 and a reflector 41. The first amplifier 40 is connected to the optical modulator and the reflector 41. An optical signal generated by the seed source 1 incidents into the reflector 41 sequentially through the first optical beam splitter 2, the optical modulator 3, and the first amplifier 40. The optical signal reflected by reflector 41 is transmitted sequentially through first amplifier 40 and the optical modulator 3, and emitted from the first optical beam splitter 2. It is also understood that the optical path system includes the seed source 1, the first optical beam splitter 2, the optical modulator 3 and at least one optical fiber amplifier assembly 4. A first terminal of the first optical beam splitter 2 is connected to the seed source 1. A common terminal of the first optical beam splitter 2 is connected to a first terminal of the optical modulator 3. A second terminal of the optical modulator 3 is connected to the optical fiber amplifier assembly 4. The optical fiber amplifier assembly 4 includes the first amplifier 40 and the reflector 41. A first terminal of the first amplifier 40 is connected to the second terminal of the optical modulator 3. A second terminal of the first amplifier 40 is connected to the reflector 41, the seed source 1 is configured to generate the first optical signal. The first optical signal is transmitted into the optical modulator 3 through first optical beam splitter 2. The optical modulator 3 is configured to modulate parameters of the first optical signal, such as to modulate a pulse width and pulse waveform of the first optical signal. The optical fiber amplifier assembly 4 is configured to amplify the first optical signal with a double pass, to obtain a third optical signal. That is, the first amplifier 40 amplifies the first optical signal, to obtain a second optical signal. The second optical signal incidents into the reflector 41 and is totally reflected by the reflector 41. The reflected second optical signal enters into the first amplifier 40 again, to be amplified. The third optical signal is thus obtained. The third optical signal incidents into the optical modulator 3. The optical modulator 3 is configured to further modulate parameters of the third optical signal. The third optical signal is emitted through the second terminal of the first optical beam splitter 2. In addition, the first optical signal generated by the seed source 1 may include a continuous optical signal or a pulsed optical signal. When the first optical signal is the continuous optical signal, the optical modulator 3 is further configured to modulate the continuous optical signal into a pulsed optical signal.

It will be understood that the parameters of the first optical signal modulated by the optical modulator 3 and the parameters of the second optical signal modulated by the optical modulator 3 may be the same or different, as long as a final desired optical signal may be obtained. The optical modulator 3 modulates the first optical signal, to obtain a desired pulse width and pulse waveform, and to reduce a cycle frequency of the pulsed optical signal. The optical modulator 3 finely modulates the third optical signal, to generate a pulsed optical signal of the desired pulse shape, pulse width, and cycle frequency, to achieve a wide range of frequencies, good pulse flatness, adjustable waveform. The optical modulator 3 performs a preliminary spectral narrowing for the first optical signal. The optical modulator 3 performs a spectral narrowing for the third optical signal, to achieve a secondary narrowing for the optical signal spectrum generated by the seed source 1.

The reflector 41 is disposed in the fiber amplifier assembly 4, so that the processed first optical signal, i.e., the second optical signal, returns through the original path, to achieve a double-pass amplification for the first optical signal. Amplification factor of the fiber amplifier assembly 4 is increased exponentially, so as to achieve a simplified optical path structure, a convenient control, a flexible design, a simple and compact structure, and a low cost. Due to an all-fiber design, a volume of the laser is reduced, and it is easy to achieve industrialization. In addition, the second optical signal has a competing relationship with a ASE and nonlinear scattered light generated from the first optical signal for the subsequent pulse in the first amplifier 40, and thus the second optical signal may suppress the ASE and nonlinear-scattered light generated from the first optical signal for the subsequent pulse in the first amplifier 40 from being excited and amplified. Therefore, the optical signal-to-noise ratio is good.

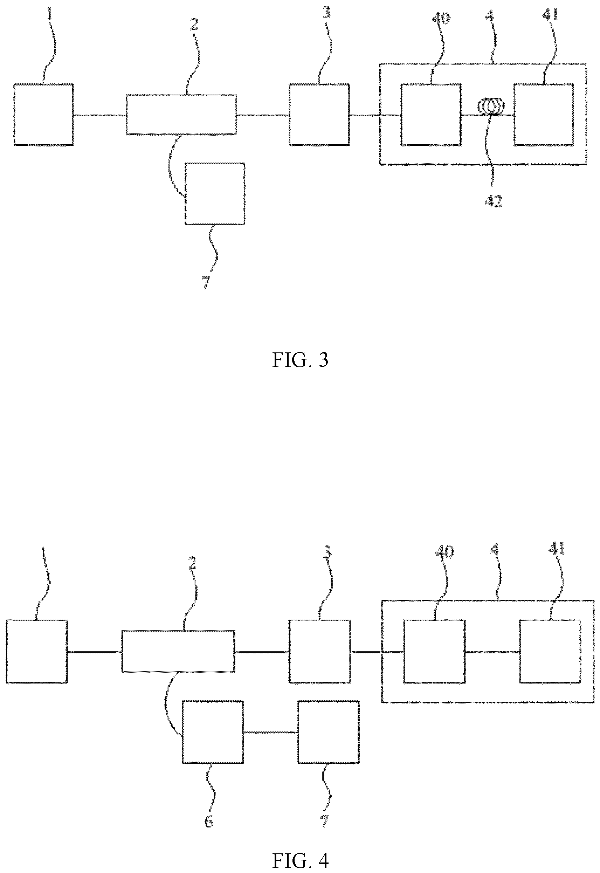

On the basis of the above implementation, referring to FIG. 3, the optical fiber amplifier assembly 4 further includes an energy transferring optical fiber 42 disposed between the first amplifier 40 and the reflector 41. The energy transferring optical fiber 42 connects the first amplifier 40 and the reflector 41. It may also be understood that the second terminal of the first amplifier 40 is connected to a first terminal of the energy transferring optical fiber 42. A second terminal of the energy transferring optical fiber 42 is connected to the reflector 41. The second optical signal is transferred through the energy transferring optical fiber 42, incidents into the reflector 41, and then is reflected by the reflector 41, so that the second optical signal returns through the original path, and enters into the first amplifier 40 again through the energy transferring optical fiber 42.The first amplifier 40 thus amplifies the second optical signal. By providing the energy transferring optical fiber 42, a transmission path for the second optical signal is increased, a time domain duration of a pulse is increased, and a transmission time of the pulse is extended. The waveform of the pulse may be precisely adjusted by the energy transferring optical fiber 42 and the optical modulator 3, and thus a pulse train is available to be output.

In some implementations, the optical modulator 3 is provided with a first channel for allowing the optical signal to enter into the optical fiber amplifier assembly, and a second channel for passing the optical signal amplified twice by the optical fiber amplifier assembly. It is also understood that the optical modulator 3 has a first channel for passing the first optical signal and a second channel for passing the third optical signal. In an alternative embodiment, two optical modulators 3 may further be provided. Each of the optical modulators 3 has a channel. One of the optical modulators 3 is configured for passing the first optical signal, and to modulate the first optical signal. The other one of the optical modulators 3 is configured for passing the third optical signal channel, and to modulate the third optical signal. The first optical signal and the third optical signal are separately modulated and transmitted, to avoid interference between the first optical signal and the third optical signal, thereby achieving precise modulation.

On the basis of the above implementation, the first channel and the second channel are set in a normal open state. The first channel and the second channel control a pass of the optical signal. By means of reducing the time to control the first channel and the second channel switch, an effect of fast pulse build-up time could be achieved.

In some implementations, referring to FIG. 2, two optical fiber amplifier assemblies 4 are provided in the optical path system. There is a second optical beam splitter 5 provided between the optical modulator 3 and the optical fiber amplifier assemblies. The second optical beam splitter 5 connects the optical modulator 3 and the two optical fiber amplifier assemblies 4. It may also be understood that two optical fiber amplifier assemblies 4 are provided. The second optical beam splitter 5 is provided between the optical modulator 3 and the optical fiber amplifier assemblies. A first terminal of the second optical beam splitter 5 is connected to the second terminal of the optical modulator 3. A second terminal of the second optical beam splitter 5 is connected to one of the optical fiber amplifier assemblies 4. A third terminal of the second optical beam splitter 5 is connected to the other one of the optical fiber amplifier assemblies 4. The second optical beam splitter 5 is configured to split the first optical signal into two beams respectively entering into the two optical fiber amplifier assemblies 4. The two beams of first optical signals are amplified with a double pass by the optical fiber amplifier assemblies 4, return to the second optical beam splitter 5 and the optical modulator 3, and then emitted from the first optical beam splitter 2. By means of providing the two fiber amplifier assemblies 4, the amplification factor for the optical signal is increased, thereby achieving advantages of greater amplification factor, simple structure and convenient control. In an alternative embodiment, a plurality of optical fiber amplifier assemblies 4 may be provided.

It is understood that the two optical fiber amplifier assemblies 4 may be provided without an energy transferring optical fiber. Alternatively, one of the optical fiber amplifier assemblies 4 is provided with the energy transferring optical fiber. Alternatively, both of the optical fiber amplifier assemblies 4 are provided with energy transferring optical fibers 42. When both of the optical fiber amplifier assemblies 4 are provided with the energy transferring optical fibers 42, the lengths of the energy transferring optical fibers may be the same or different. In an alternative embodiment, a plurality of such optical fiber amplifier assemblies 4 may be provided.

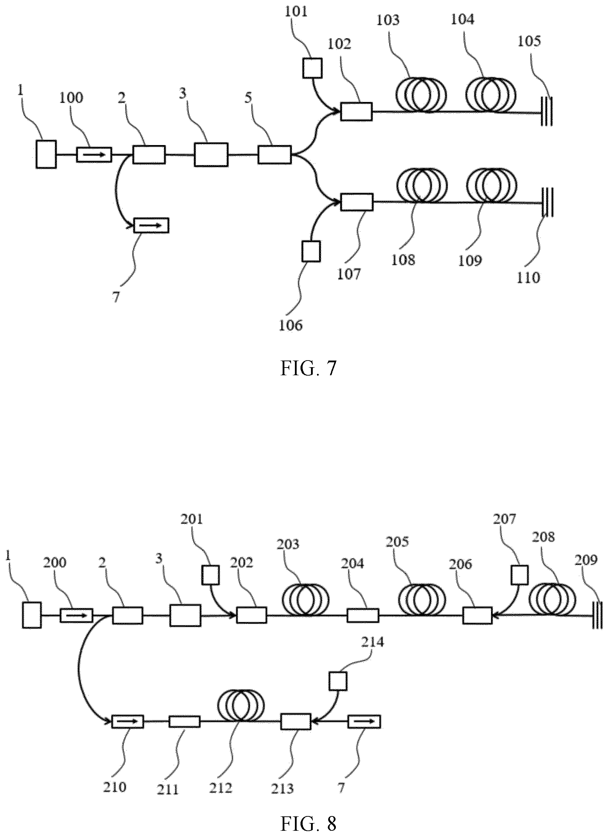

As an example, referring to FIG. 7, the optical path system of the pulsed fiber laser includes the seed source 1, a second optical isolator 100, the first optical beam splitter 2, the optical modulator 3, the second optical beam splitter 5, a tenth pump source 101, a sixth fiber coupler 102, an eighth gain fiber 103, a first energy transferring optical fiber 104, a first reflection grating 105, an eleventh pump source 106, a fifth optical combiner 107, a ninth gain fiber 108, a second energy transferring optical fiber 109, a second reflection grating 110, and a first optical isolator 7. A first terminal of second optical isolator 100 is connected to the seed source 1. A second terminal of second optical isolator 100 is connected to the first terminal of the first optical beam splitter 2. A second terminal of the first optical beam splitter 2 is connected to the first optical isolator 7. The common terminal of the first optical beam splitter 2 is connected to the optical modulator 3. The second terminal of the first optical beam splitter 2 is connected to the first terminal of the optical modulator 3. The second terminal of the optical modulator 3 is connected to the first terminal of the second optical beam splitter 5. Both the second terminal of the second optical beam splitter 5 and the tenth pump source 101 are connected to a first terminal of the sixth optical fiber coupler 102. A second terminal of the sixth optical fiber coupler 102 is connected to a first terminal of the eighth gain fiber 103. A second terminal of the eighth gain fiber 103 is connected to the first terminal of the first energy transferring optical fiber 104. The second terminal of the first energy transferring optical fiber 104 is connected to the first reflection grating 105. Both the third terminal of the second optical beam splitter 5 and the eleventh pump source 106 are connected to a first terminal of the fifth optical combiner 107. A second terminal of the fifth optical combiner 107 is connected to a first terminal of the ninth gain fiber 108. A second terminal of the ninth gain fiber 108 is connected to a first terminal of the second energy transferring optical fiber 109. A second terminal of the second energy transferring optical fiber 109 is connected to the second reflection fiber. The first optical signal generated by the seed source 1 enters into the second optical beam splitter 5 through the second optical isolator 100, the first optical beam splitter 2, and the optical modulator 3, and is split into two beams by the second optical beam splitter 5. The two beams of first optical signals enter into the eighth gain fiber 103 and the ninth gain fiber 108, respectively, are amplified by stimulated emission of radiation in the eighth gain fiber 103 and the ninth gain fiber 108, and are output from the second terminal of the eighth gain fiber 103 and the second terminal of the ninth gain fiber 108. At this time, the first optical signals are amplified, and the second optical signals with higher power is generated. The second optical signals are transmitted through the first energy transferring optical fiber 104 and the second energy transferring optical fiber 109, and reflected by the first reflection grating 105 and the second reflection grating 110. The second optical signals return along the original optical paths. That is, the second optical signals are transmitted through the eighth gain fiber 103 and the ninth gain fiber 108, are amplified by stimulated emission of radiation in the eighth gain fiber 103 and the ninth gain fiber 108, and are output from the first terminal of the eighth gain fiber 103 and the first terminal of the ninth gain fiber 108. The third optical signal with higher power is generated. The third optical signal is transmitted through the second optical beam splitter 5, the optical modulator 3, the first optical beam splitter 2, and output from the first optical isolator 7.

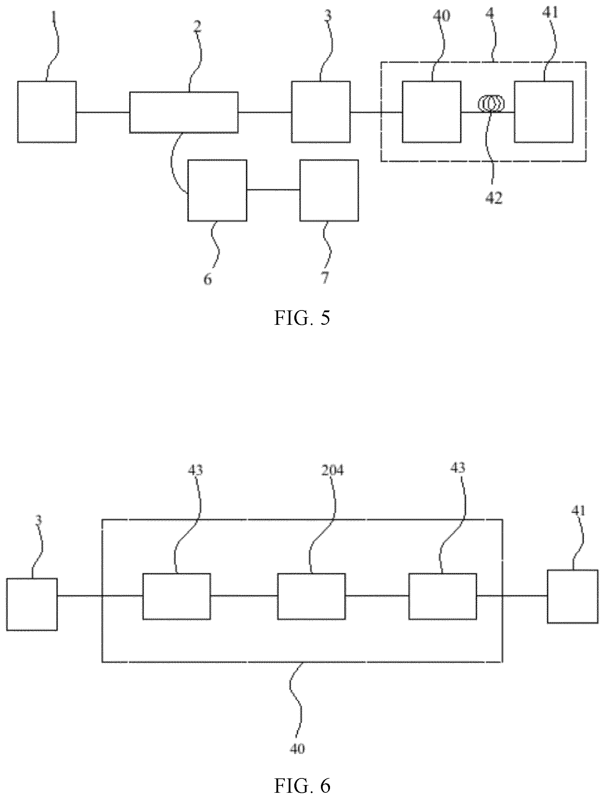

In some implementations, referring to FIGS. 4 and 5, the optical path system of the pulsed fiber laser further includes a second amplifier 6 and the first optical isolator 7. The second amplifier 6 is connected to the first optical beam splitter 2 and the first optical isolator 7. The optical signal processed by the optical fiber amplifier assembly 4 and the optical modulator 3 enters into the second amplifier 6 through the first optical beam splitter 2 and is emitted from the first optical isolator 7. It is also understood that the optical path system further includes the second amplifier 6 and the first optical isolator 7. The second terminal of the first optical beam splitter 2 is connected to a first terminal of the second amplifier 6. A second terminal of the second amplifier 6 is connected to the first optical isolator 7. The third optical signal output by the optical modulator 3 enters into the second amplifier 6 and is amplified by the second amplifier 6. Thus, the fourth optical signal is output. The fourth optical signal is output from the first optical isolator 7. The fourth optical signal has the maximum power. The reflector 41 is avoided from being damaging and the reliability of the laser is improved, while the power is increased.

It may be understood that the second amplifier 6 in this embodiment may have the same configuration as that of the first amplifier 40. The second amplifier 6 includes a plurality of amplifier sub-portions sequentially connected. One terminal of a first one of the respective amplifier sub-portions is connected to the second terminal of the first optical beam splitter 2. Adjacent ones of the amplifier sub-portions are connected to each other through a filter. A last one of the respective amplifier sub-portions is connected to the first optical isolator 7.

In some implementations, referring to FIG. 6, the first amplifier 40 includes a plurality of amplifier sub-portions connected in series. Adjacent ones of the amplifier sub-portions are connected to each other by a filter 204. One terminal of a first one of the amplifier sub-portions is connected to the optical modulator 3. One terminal of a last one of the amplifier sub-portions is connected to the reflector 41. Additionally/alternatively, the second amplifier 6 includes a plurality of amplifier sub-portions connected in series. Adjacent ones of the amplifier sub-portions are connected to each other through the filter. One terminal of a first one of the respective amplifier sub-portions is connected to the first optical beam splitter 2. One terminal of a last one of the respective amplifier sub-portions is connected to the first optical isolator 7.

It may also be understood that, referring to FIG. 6, the first amplifier 40 includes a plurality of amplifier sub-portions, such as a first amplifier sub-portion 43, ......, an Nth amplifier sub-portion 43. The plurality of amplifier sub-portions are arranged sequentially from a side of the first amplifier 40 close to the optical modulator 3 to a side of the first amplifier 40 close to the reflector 41. The filter 204 is disposed between adjacent ones of the amplifier sub-portions. The first amplifier sub-portion 43 is connected to the second terminal of the optical modulator 3, and the Nth amplifier sub-portion 43 is connected to the reflector 41. The first optical signal is amplified by N levels through the first amplifier sub-portion 43, ......, and the Nth amplifier sub-portion 43, to form the second optical signal. The second optical signal incidents into the reflector 41. The second optical signal reflected by the reflector is amplified by N levels through the Nth amplifier sub-portion 43, ......, and the first amplifier sub-portion 43, to form the third optical signal. The number of respective amplifier sub-portions 43 may be set according to the desired amplification factor. The amplification factor is increased.

The second amplifier 6 includes a plurality of amplifier sub-portions, such as a first amplifier sub-portion 43, ......, an Nth amplifier sub-portion 43. The plurality of amplifier sub-portions are arranged sequentially from a side of the second amplifier 6 close to the first optical beam splitter 2 to a side of the second amplifier 6 close to the first optical isolator 7. The filter 204 is disposed between adjacent ones of the amplifier sub-portions. The first amplifier sub-portion 43 is connected to the second terminal of the first optical beam splitter 2, and the Nth amplifier sub-portion 43 is connected to the first optical isolator 7. The third optical signal is amplified by N levels through the Nth amplifier sub-portion 43, ......, and the first amplifier sub-portion 43, to form the fourth optical signal. The number of respective amplifier sub-portions 43 may be set according to the desired amplification factor. The amplification factor is increased..

The first amplifier 40 described above may have the same structure as that of the second amplifier 6. The first amplifier 40 may have the same number of amplifier sub-portions as that of the second amplifier 6. Alternatively, the first amplifier 40 may have a structure different from that of the second amplifier 6. For example, the first amplifier 40 has the above plurality of amplifier sub-portions for double-pass single direction multi-level amplification, and the second amplifier 6 is configured for one-level amplification. Alternatively, the first amplifier 40 is configured for one-level double-pass amplification. The second amplifier 6 is configured for single direction multi-level amplification. The configurations of the first amplifier 40 and the second amplifier 6 may be adjusted depending on the desired amplification factor.

It is understood that each of the above amplifier sub-portions includes a gain fiber, a fiber coupler, and a pump source. The fiber coupler of the first amplifier sub-portions 43 of the first amplifier 40 is connected to the optical modulator 3, the pump source, and a side of the gain fiber. Another side of the gain fiber is connected to the filter. The fiber coupler of the Nth amplifier sub-portion 43 of the first amplifier 40 is connected to the reflector, the pump source, and a side of the gain fiber, and the other side of the gain fiber is connected to the filter. The fiber coupler of the Nth amplifier sub-portion 43 of the first amplifier 40 is connected to the reflector, the pump source, a side of the gain fiber, and the other side of the gain fiber is connected to the filter.

In an embodiment, referring to FIG. 8, the optical path system of the pulsed fiber laser includes the seed source 1, a third optical isolator 200, the first optical beam splitter 2, the optical modulator 3, a seventh pump source 201, a fourth fiber coupler 202, a fifth gain fiber 203, a filter 204, a sixth gain fiber 205, a fifth fiber coupler 206, an eighth pump source 207, a third energy transferring optical fiber 208, a third reflection grating 209, a fourth optical isolator 210, a first stripper 211, a seventh gain fiber 212, a fourth fiber combiner 213, a ninth pump source 214, and the first optical isolator 7. A first terminal of the third optical isolator 200 is connected to the seed source 1. A second terminal of the third optical isolator 200 is connected to the first terminal of the first optical beam splitter 2. The common terminal of the first optical beam splitter 2 is connected to the first terminal of the optical modulator 3. The optical modulator 3 and the seventh pump source 201 are commonly connected to a first terminal of the fourth fiber coupler 202. A second terminal of the fourth fiber coupler 202 is connected to a first terminal of the fifth gain fiber 203. A second terminal of the fifth gain fiber 203 is connected to a first terminal of the filter 204. A second terminal of the filter 204 is connected to a first terminal of the sixth gain fiber 205. A second terminal of the sixth gain fiber 205 is connected to a first terminal of the sixth gain fiber 205. A second terminal of the sixth gain fiber 205 is connected to a first terminal of the fifth fiber coupler 206. A second terminal of the fifth fiber coupler 206 is connected to both the eighth pump source 207 and a first terminal of the third energy transferring optical fiber 208. A second terminal of the third energy transferring optical fiber 208 is connected to the third reflection grating 209. The second terminal of the first optical beam splitter 2 is connected to a first terminal of the fourth optical isolator 210. A second terminal of the fourth optical isolator 210 is connected to a first terminal of the first stripper 211. A second terminal of the first stripper 211 is connected to a first terminal of the seventh gain fiber 212. A second terminal of the seventh gain fiber 212 is connected to a first terminal of the fourth optical fiber combiner 213. A second terminal of the fourth optical fiber combiner 213 is connected to both the ninth pump source 214 and the first optical isolator 7. The first optical signal generated by the seed source 1 enters into the optical modulator 3 through the third optical isolator 200 and the first optical beam splitter 2. Then, the first optical signal is transmitted through the fifth gain fiber 203 and the sixth gain fiber 205, amplified by stimulated emission of radiation in the fifth gain fiber 203 and the sixth gain fiber 205, and output from the second terminal of the sixth gain fiber 205. In this case, the first optical signal is amplificated by two levels, so that the second optical signal with higher power is generated. The second optical signal is transmitted through the energy transferring optical fiber 208, and reflected by the third reflection grating 209. The second optical signal returns along the original optical path. After the second optical signal is amplified by two levels in the sixth gain fiber 205 and the fifth gain fiber 203, the second optical signal is output from the first terminal of the fifth gain fiber 203. The third optical signal with higher power is generated. The third optical signal enters into the optical modulator 3, and is split by the first optical beam splitter 2, and enters into the seventh gain fiber 212 through the fourth optical isolator 210 and the first stripper 211. The third optical signal is amplified by stimulated emission of radiation in the seventh gain fiber 212. The fourth optical signal with higher power is formed. The fourth optical signal is output from the first optical isolator 7.

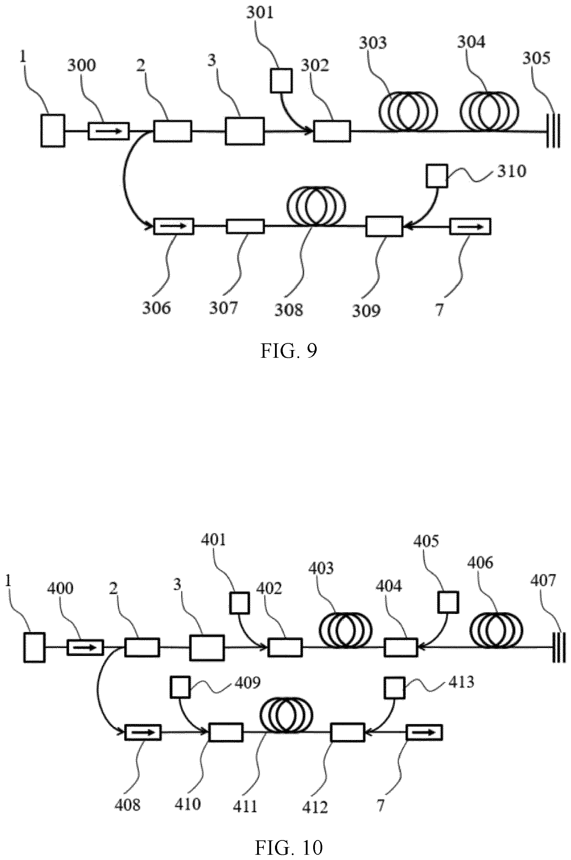

In some implementations, referring to FIG. 9, the first amplifier 40 and the second amplifier 6 may be used to achieve one stage amplification to be described below, in addition to multi-stage amplification. The second amplifier 6 includes a second gain fiber 308, a first optical combiner 309 and a second pump source 310. A side of the second gain fiber 308 is connected to the first optical beam splitter 2. The first optical combiner 309 is connected to another side of the second gain fiber 308, the second pump source 310, and the first optical isolator 7. Additionally/alternatively, the first amplifier 40 includes a first gain fiber 303, a first fiber coupler 302, and a first pump source 301. The first fiber coupler 302 is connected to the optical modulator 3, the first pump source 301, and a side of the first gain fiber 303. The other side of the gain fiber is connected to the reflector 41.

In an embodiment, referring to FIG. 9, the optical path system of the pulsed fiber laser includes the seed source 1, a fifth optical isolator 300, the first optical beam splitter 2, the optical modulator 3, a first pump source 301, a first fiber coupler 302, a first gain fiber 303, a fourth energy transferring optical fiber 304, a fourth reflection grating 305, a sixth optical isolator 306, a second mode-extruder 307, a second gain fiber 308, a first optical combiner 309, a second pump source 310 and the first optical isolator 7. A first terminal of the fifth optical isolator 300 is connected to the seed source 1. A second terminal of the fifth optical isolator 300 is connected to the first terminal of the first optical beam splitter 2. The common terminal of the first optical beam splitter 2 is connected to the first terminal of the optical modulator 3. Both the second terminal of the optical modulator 3 and the first pump source 301 are connected to a first terminal of the first fiber coupler 302. A second terminal of the first fiber coupler 302 is connected to a first terminal of the first gain fiber 303. A second terminal of the first gain fiber 303 is connected to a first terminal of the fourth energy transferring optical fiber 304. A second terminal of the fourth energy transferring optical fiber 304 is connected to the fourth reflection grating 305. The second terminal of the first optical beam splitter 2 is connected to a first terminal of the sixth optical isolator 306. A second terminal of the sixth optical isolator 306 is connected to a first terminal of the second stripper 307. A second terminal of the second stripper 307 is connected to a first terminal of the second gain fiber 308. A second terminal of the second gain fiber 308 is connected to a first terminal of the first optical combiner 309. A second terminal of the first optical combiner 309 is connected to both the second pump source 310 and the first optical isolator 7. The first optical signal generated by the seed source 1 enters into the second gain fiber 308 through the fifth optical isolator 300, the first optical beam splitter 2, and optical modulator 3. The first optical signal is amplified by stimulated emission of radiation in the second gain fiber 308, and output from the second terminal of the second gain fiber 308. The second optical signal with higher power is generated. The second optical signal enters into the fourth energy transferring optical fiber 304, is reflected by the fourth reflection grating 305, and enters into the second gain fiber 308 from the second terminal of the second gain fiber 308, and is amplified by stimulated emission of radiation in the second gain fiber 308. The third optical signal with higher power is generated. The third optical signal enters into the optical modulator 3, and enters into the second gain fiber 308 through the sixth optical isolator 306 and the second stripper 307. The third optical signal is amplified by stimulated emission of radiation in the second gain fiber 308. The fourth optical signal with higher power is formed. The fourth optical signal is output from the first optical isolator 7.

In some implementations, referring to FIG. 10, the first amplifier 40 and the second amplifier 6 may be used to achieve one stage amplification to be described below, in addition to multi-stage amplification. The second amplifier 6 includes a fourth gain fiber 411, a second optical combiner 412, a sixth pump source 413, a third optical combiner 410, and a fifth pump source 409. The third optical combiner 410 is connected to the first optical beam splitter 2, the fifth pump source 409, a side of the fourth gain fiber 411. The second optical combiner 412 is connected to the sixth pump source 413, the first optical isolator 7, and another side of the fourth gain fiber 411. Additionally/alternatively, the first amplifier 40 includes a third gain fiber 403, a second fiber coupler 402, a third fiber coupler 404, a third pump source 401, and a fourth pump source 405. The second fiber coupler 402 is connected to the optical modulator 3, the third pump source 401, and a side of the third gain fiber 403, and the third fiber coupler 404 is connected to the fourth pump source 405, the reflector 41, and another side of the third gain fiber 403.

In an embodiment, referring to FIG. 10, the optical path system of the pulsed fiber laser includes the seed source 1, a seventh optical isolator 400, the first optical beam splitter 2, the optical modulator 3, the third pump source 401, the second fiber coupler 402, the third gain fiber 403, the third fiber coupler 404, the fourth pump source 405, a fifth energy transferring optical fiber 406, a fifth reflection grating 407, an eighth optical isolator 408, the fifth pump source 409, the third optical combiner 410, the fourth gain fiber 411, the second optical combiner 412, the sixth pump source 413 and the first optical isolator 7. A first terminal of the seventh optical isolator 400 is connected to the seed source 1. A second terminal of the optical isolator 400 is connected to the first terminal of the first optical beam splitter 2. The common terminal of the first optical beam splitter 2 is connected to the first terminal of the optical modulator 3. The second terminal of the optical modulator 3 and the third pump source 401 are commonly connected to a first terminal of the second fiber coupler 402. A second terminal of the second fiber coupler 402 is connected to a first terminal of the third gain fiber 403. A second terminal of the third gain fiber 403 is connected to a first terminal of the third fiber coupler 404. A second terminal of the third fiber coupler 404 is connected commonly to the fourth pump source 405 and a first terminal of the fifth energy-transmitting fiber 406. A second terminal of the fifth energy-transmitting fiber 406 is connected to the fifth reflection grating 407. The second terminal of the first optical beam splitter 2 is connected to a first terminal of the eighth optical isolator 408. The first terminal of the eighth optical isolator 408 and the fifth pump source 409 are commonly connected to a first terminal of the third optical combiner 410. A second terminal of the third optical combiner 410 is connected to a first terminal of the fourth gain fiber 411. A second terminal of the fourth gain fiber 411 is connected to a first terminal of the second optical combiner 412. A second terminal of the second optical combiner 412 is connected commonly to the sixth pump source 413 and the first optical isolator 7. The first optical signal generated in the seed source 1 enters into the third gain fiber 403 through the seventh optical isolator 400, the first optical beam splitter 2 and the optical modulator 3. The first optical signal is amplified by stimulated emission of radiation in the third gain fiber 403, and output from the second terminal of the third gain fiber 403. The second optical signal with higher power is generated. The second optical signal enters into the fifth energy transferring optical fiber 406, is reflected by the fifth reflection grating 407, and then enters into the third gain fiber 403 from the second terminal of the third gain fiber 403. The second optical signal is amplified by stimulated emission of radiation in the third gain fiber 403. The third optical signal with higher power is generated. The third optical signal enters into the optical modulator 3, and enters into the fourth gain fiber 411 through the eighth optical isolator 408. The third optical signal is amplified by stimulated emission of radiation in the fourth gain fiber 411. The fourth optical signal with higher power is formed. The fourth optical signal is output from the first optical isolator 7.

In an embodiment, the seed source 1 may be continuous laser, or may be pulsed laser. The above isolator except the first optical isolator 7 may include fiber type 6/125 type or 10/125 type of isolator, also may include polarization-independent, no bandpass online isolator, or also may include a isolator with passive fiber. The above optical beam splitter may include 2×1 optical beam splitter, such as 6/125 type or 10/125 type of optical beam splitter. The above optical modulator may include 120 MHz acousto-optic modulator, such as 6/125 type or 10/125 type of optical modulator. The above pump source may include a semiconductor laser diode with a center wavelength of 915nm or 976nm, such as a semiconductor laser diode with 105/125 type of fiber model. The above fiber combiner may include(1+2)×1fiber combiner, such as 6/125 type, 10/125 type, or 20/125 type of fiber combiner. The above gain fiber may include ytterbium-doped fiber of core diameter of 6 microns, 10 microns or 20 microns. The above energy transferring optical fiber may include 6/125 type or 10/125 type of passive fiber. The above reflector and reflection grating may include reflective fiber Bragg grating, or high reflection type fiber Bragg grating with reflectivity greater than 99%. The above optical stripper may have such as 6/125 type, 10/125 type, or 20/125 type. The first optical isolator may include 20/125 type of output optical isolator.

In the above embodiments, the description of each embodiment has its own focus, and portions that are not described in detail in a particular embodiment may be referred to the relevant descriptions of other embodiments.

In the description of the present disclosure, the terms "first" and "second" are used for descriptive purposes only, and are not to be construed as indicating or implying relative importance or implicitly specifying the number of technical features indicated. Thus, the features with "first" and "second" may explicitly or implicitly include one or more features.

The optical path system of the pulsed fiber laser and the laser according to an embodiment of the present disclosure are described in detail above. The principle and implementation of the present disclosure are described herein by using specific examples. The above embodiments are only used to help understand the method of the present disclosure and its core ideas. At the same time, for those skilled in the art, amendments or modifications may be made in the implementations and application scopes according to the ideas of the present disclosure. In sum, the content of the present disclosure should not be understood as a limitation of the present disclosure.

## Claims

1. An optical path system of a pulsed fiber laser, **characterized in that** the optical path system comprises a seed source, a first optical beam splitter, an optical modulator, and at least one optical fiber amplifier assembly sequentially connected, wherein the optical fiber amplifier assembly comprises a first amplifier and a reflector , the first amplifier is connected to the optical modulator and the reflector , an optical signal generated by the seed source incidents into the reflector sequentially through the first optical beam splitter, the optical modulator , and the first amplifier , and the optical signal reflected by the reflector is transmitted sequentially through first amplifier and the optical modulator, and emitted from the first optical beam splitter .

2. The optical path system of the pulsed fiber laser of claim 1, **characterized in that** the optical fiber amplifier assembly further comprises an energy transferring optical fiber disposed between the first amplifier and the reflector, the energy transferring optical fiber connects the first amplifier and the reflector , the optical signal generated by the seed source incidents into the reflector sequentially through the first optical beam splitter , the optical modulator , the first amplifier , and the energy transferring optical fiber, and the optical signal reflected by the reflector is transmitted sequentially through the energy transferring optical fiber , the first amplifier, and the optical modulator, and emitted from the first optical beam splitter.

3. The optical path system of the pulsed fiber laser of claim 2, **characterized in that** the energy transferring optical fiber is disposed to increase a propagation path of the optical signal, to increase a time domain duration of a pulse, and to extend transmission time of the pulse.

4. The optical path system of the pulsed fiber laser of claim 3, **characterized in that** the optical modulator is used to adjust waveform of the pulse and output a pulse train.

5. The optical path system of the pulsed fiber laser of claim 1, **characterized in that** there are two optical fiber amplifier assemblies , and wherein there is a second optical beam splitter provided between the optical modulator and the optical fiber amplifier assemblies, and the second optical beam splitter connects the optical modulator and the optical fiber amplifier assemblies.

6. The optical path system of the pulsed fiber laser of claim 1, **characterized in that** the optical path system further comprises a second amplifier and a first optical isolator, wherein the second amplifier is connected to the first optical beam splitter and the first optical isolator, and the optical signal processed by the fiber amplifier assembly and the optical modulator enters to the second amplifier through the first optical beam splitter and is emitted from the first optical isolator.

7. The optical path system of the pulsed fiber laser of claim 1, **characterized in that** the first amplifier comprises a plurality of amplifier sub-portions connected in series, adjacent ones of the amplifier sub-portions are connected to each other by a filter, one terminal of a first one of the amplifier sub-portions is connected to the optical modulator, and one terminal of a last one of the amplifier sub-portions at a last place is connected to the reflector.

8. The optical path system of the pulsed fiber laser of claim 1, **characterized in that** the second amplifier comprises a plurality of amplifier sub-portions connected in series, wherein adjacent ones of the amplifier sub-portions are connected to each other by a filter, one terminal of a first one of the amplifier sub-portions is connected to the first optical beam splitter, and one terminal of a last one of the amplifier sub-portions is connected to the first optical isolator.

9. The optical path system for a pulsed fiber laser according to claim 1, **characterized in that** the first amplifier comprises a plurality of amplifier sub-portions connected in series, wherein adjacent ones of the amplifier sub-portions are connected to each other by a filter, one terminal of a first one of the amplifier sub-portions is connected to the optical modulator, and one terminal of a last one of the amplifier sub-portions at a last place is connected to the reflector; and
the second amplifier comprises a plurality of amplifier sub-portions connected in series, adjacent ones of the amplifier sub-portions are connected to each other by a filter, one terminal of a first one of the amplifier sub-portions is connected to the first optical beam splitter, and one terminal of a last one of the amplifier sub-portions is connected to the first optical isolator.

10. The optical path system of the pulsed fiber laser of claim 6, **characterized in that** the second amplifier comprises a second gain fiber, a first optical combiner and a second pump source, a side of the second gain fiber is connected to the first optical beam splitter, and the first optical combiner is connected to the second pump source, the first optical isolator, and another side of the second gain fiber.

11. The optical path system of the pulsed fiber laser of claim 6, **characterized in that** the first amplifier comprises a first gain fiber, a first fiber coupler, and a first pump source the first fiber coupler is connected to the optical modulator, the first pump source, and a side of the first gain fiber, and another side of the gain fiber is connected to the refl ector.

12. The optical path system of the pulsed fiber laser of claim 6, **characterized in that** the second amplifier comprises a second gain fiber, a first optical combiner, and a second pump source, a side of the second gain fiber is connected to the first optical beam splitter, and the first optical combiner is connected to the second pump source, the first optical isolator, and another side of the second gain fiber; and
the first amplifier comprises a first gain fiber, a first fiber coupler, and a first pump source, the first fiber coupler is connected to the optical modulator, the first pump source, and a side of the first gain fiber, and another side of the gain fiber is connected to the reflector.

13. The optical path system of the pulsed fiber laser of claim 6, **characterized in that** the second amplifier comprises a fourth gain fiber, a second optical combiner, a sixth pump source, a third optical combiner, and a fifth pump source, the third optical combiner is connected to the optical beam splitter, the fifth pump source, and a side of the fourth gain fiber, and the second optical combiner is connected to the sixth pump source, the first optical isolator, and another side of the fourth gain fiber.

14. The optical path system of the pulsed fiber laser of claim 6, **characterized in that** the first amplifier comprises a third gain fiber, a second fiber coupler, a third fiber coupler, a third pump source, and a fourth pump source, the second fiber coupler is connected to the optical modulator, the third pump source, a side of the third gain fiber, and the third fiber coupler is connected to the fourth pump source the reflector, and another side of the gain fiber.

15. The optical path system of the pulsed fiber laser of claim 6, **characterized in that** the second amplifier comprises a fourth gain fiber, a second optical combiner, a sixth pump source, a third optical combiner, and a fifth pump source, the third optical combiner is connected to the optical beam splitter, the fifth pump source, and a side of the fourth gain fiber, and the second optical combiner is connected to the sixth pump source, the first optical isolator, and another side of the fourth gain fiber; and
the first amplifier comprises a third gain fiber, a second fiber coupler, a third fiber coupler, a third pump source, and a fourth pump source the second fiber coupler is connected to the optical modulator, the third pump source, a side of the third gain fiber, and the third fiber coupler is connected to the fourth pump source, the reflector, and another side of the gain fiber.

16. The optical path system of the pulsed fiber laser of claim 1, **characterized in that** the optical modulator is provided with a first channel for allowing the optical signal to enter into the optical fiber amplifier assembly and a second channel for passing the optical signal amplified twice by the optical fiber amplifier assembly .

17. The optical path system of the pulsed fiber laser of claim 16, wherein the first channel and the second channel are set in a normal open state.

18. The optical path system of the pulsed fiber laser of claim 2, **characterized in that** the energy transferring optical fiber comprises a 6/125 type or 10/125 type of passive fiber.

19. The optical path system of the pulsed fiber laser according to claim 3, **characterized in that** the optical modulator comprises a 120 MHz acousto-optic modulator.

20. A laser, **characterized in that** the laser comprises the optical path system of the pulsed fiber laser of claim 1.
